# FASCICULE DE BREVET EUROPEEN

(11) **EP 2 797 284 B1**
(45) Date de publication et mention de la délivrance du brevet: **31.10.2018**
(21) Numéro de dépôt: 14165237.0
(22) Date de dépôt: 17.04.2014
(51) Int. Cl.: H04L 29/06, H04W 12/08, G06F 21/10, H04L 29/08, G06F 17/30, G06F 21/62

(54) **Procédés et systèmes pour l'accès contrôlé à des données stockées dans un réseau**
Verfahren und Systeme für einen kontrollierten Zugriff auf in einem Netz gespeicherte Daten
Methods and systems for controlled access to data stored in a network

(30) Priorité: 23.04.2013 FR 1353704
(43) Date de publication de la demande: 29.10.2014
(73) Titulaire: Orange, 75015 Paris (FR)
(72) Inventeur: Guignon, Richard, 35410 Domloup (FR); Guegan, Delphine, 35830 Betton (FR); Cutullic, Christophe, 35410 Domloup (FR)

(56) Documents cités:
- EP-A1- 1 701 483
- EP-A1- 2 493 144
- WO-A1-2010/103167
- US-A1- 2012 331 108
- US-A1- 2013 067 303
- M. Wohlford: "Rackspace Cloud Files Adds New Control Features", , 25 avril 2012 (2012-04-25), pages 1-3, XP002717833, Extrait de l'Internet: URL:http://www.rackspace.com/blog/rackspac e-cloud-files-adds-new-control-features [extrait le 2013-12-11]
- A. Rehman: "Proximity-Based Temporary File Sharing App Swarmbit Comes to Android", , 17 février 2012 (2012-02-17), pages 1-6, XP002717832, Extrait de l'Internet: URL:http://www.addictivetips.com/mobile/pr oximity-based-temporary-file-sharing-app-s warmbit-comes-to-android/ [extrait le 2013-12-11]

## Description

La présente invention se rapporte au domaine du contrôle d'accès à des données stockées dans un réseau de communication, par l'intermédiaire de terminaux de communication.

Grâce aux évolutions techniques récentes dans le domaine du stockage réseau (encore appelé "cloud computing" en anglais), le stockage des contenus personnels, le plus souvent multimédias se fait de plus en plus dans le réseau (ou "cloud"), d'une part pour éviter l'encombrement des mémoires des terminaux ou équipements et d'autre part, pour avoir accès aux contenus stockés dans des lieux et sur des équipements différents.

Des contraintes apparaissent cependant lorsque l'on souhaite accéder ou partager ces contenus sur un terminal non personnel (chez un ami, dans sa famille, dans un cybercafé, pendant une réunion, etc.). La sécurité de l'accès à ces données n'est pas toujours vérifiée.

Différentes techniques d'accès à ces données sont possibles :
- Il est possible de se connecter à un espace de stockage personnel géré dans le réseau, protégé par identifiant et mot de passe. Cette possibilité nécessite une identification sur le poste cible et peut générer des problèmes de sécurité en laissant des "traces" sur ce terminal (cookies, mouchards, virus...). Cette méthode ne gère pas la durée d'accès aux contenus;
- Il est possible d'accéder à distance à des services internet qui vont gérer à la place de l'utilisateur, le stockage, l'organisation, l'accès et la présentation des contenus, en utilisant une adresse spécifique. Cependant, la récupération de cette adresse peut être contraignante (saisie complexe, utilisation d'un moteur de recherche internet, ou envoi d'un message de type mail ou sms au préalable...), et la durée d'accès au service et donc aux contenus n'est pas maîtrisée (si la session d'accès internet n'est pas coupée, ou si un cookie mémorise les informations d'identifications par exemple) ;
- Il est enfin possible d'ajouter la personne tiers disposant du terminal cible dans une liste de partage (à faire au préalable), et cette personne sera donc "invitée" à accéder aux contenus mis en partage dans le réseau. Ceci implique cependant une gestion des invitations (création, suppression des utilisateurs), l'attribution d'identifiants à chacun des "invités", et ne permet pas un accès aux contenus à partir d'un terminal public, ou appartenant à un tiers non identifié avant l'accès.

La demande de brevet Européenne EP 1 450 282 décrit un partage de données stockées dans un réseau de communication entre deux utilisateurs A et B qui possèdent des terminaux munis également de moyens de communication courte portée. L'utilisateur A qui souhaite partager un contenu qui est stocké dans le réseau, demande au serveur de stockage une adresse URL (pour "Uniform Resource Locator" en anglais) d'accès à ces données. Il envoie l'adresse ainsi obtenue à l'utilisateur B par l'intermédiaire de son terminal et de la communication courte portée entre les deux terminaux. L'utilisateur B peut alors consulter les contenus à l'adresse qu'il a reçue.

Cependant, cette méthode de partage, même si elle permet un échange simplifié de données stockées dans le réseau, ne permet pas un contrôle précis de l'accès à ses données par l'utilisateur A. En effet, une l'adresse URL échangée entre les deux terminaux, est toujours présente dans le terminal de l'utilisateur B qui pourra s'en servir ultérieurement à sa guise ou la transférer à un autre utilisateur. L'utilisateur A n'a donc plus le contrôle de ces données. De plus, l'utilisateur B qui peut accéder aux contenus via l'adresse URL qu'il a reçue, peut visualiser ou récupérer les données et les montrer à des personnes qui sont autour de lui sans que l'utilisateur A puisse le contrôler.

Il existe donc un besoin d'une méthode de contrôle précis d'accès à des données stockées sur un réseau de communication.

La présente invention vient améliorer la situation.

Elle est définie dans les revendications indépendantes.

Elle propose à cet effet, un procédé de contrôle d'accès à des données stockées sur un réseau de communication, entre un premier et un deuxième terminal, les terminaux étant équipés d'un premier moyen de communication courte portée et d'un deuxième moyen de communication vers ledit réseau, le procédé comprenant les étapes suivantes mises en oeuvre par le premier terminal:
- envoi vers le réseau de communication, d'une demande de création d'une adresse d'accès aux données stockées;
- réception d'une adresse d'accès correspondante;
- envoi de l'adresse d'accès vers le deuxième terminal via le premier moyen de communication courte portée.
Le procédé est tel qu'il comporte une étape d'envoi d'une commande de désactivation de l'adresse d'accès au réseau de communication lors de la détection qu'au moins un des deux terminaux est en dehors du champ de portée du premier moyen de communication courte portée.

Ainsi, l'utilisateur du premier terminal a un contrôle précis des données qu'il souhaite montrer ou partager à l'utilisateur du deuxième terminal. En effet, non seulement, il peut donner l'accès à des données qu'il aura sélectionnées au préalable pour qu'elles soient accessibles à une adresse prédéterminée mais il peut également contrôler les actions de l'utilisateur du deuxième terminal qui n'a accès à ses données que lorsqu'il est physiquement, avec son terminal, dans le champ de portée de la communication courte portée que possède les terminaux. Il peut ainsi s'assurer que personne d'autre ne pourra visualiser ses données et que l'utilisateur du deuxième terminal n'emportera pas l'adresse d'accès à ses contenus lorsqu'il s'éloigne physiquement de lui.

Les différents modes particuliers de réalisation mentionnés ci-après peuvent être ajouté indépendamment ou en combinaison les uns avec les autres, aux étapes du procédé de contrôle d'accès défini ci-dessus.

Dans un mode particulier de réalisation, l'adresse d'accès aux données stockées sur le réseau est une adresse temporaire d'une durée prédéterminée.

Le fait que l'adresse d'accès soit temporaire apporte une sécurité supplémentaire sur le contrôle de l'accès aux données. La désactivation de l'adresse d'accès se faisant alors automatiquement après une durée prédéterminée. Elle peut donc se faire même si l'utilisateur du deuxième terminal est encore dans le champ de portée du premier moyen de communication mais aussi dans l'éventualité où la demande de désactivation ne parviendrait pas au serveur d'accès dans le réseau.

Dans un mode particulier de réalisation, le premier moyen de communication courte portée est un moyen de type NFC.

Cette communication a une très courte portée (moins de 10cm). Le contrôle de l'utilisateur du premier terminal sur l'accès à ses données par l'utilisateur du second terminal est alors très précis puisque celui-ci ne peut consulter les données que dans un périmètre de moins de 10 cm du premier terminal.

Dans une variante de réalisation, la demande de création d'une adresse comporte l'identifiant d'un deuxième terminal et l'adresse d'accès aux données stockées sur le réseau est une adresse réservée à ce deuxième terminal.

Ainsi, l'échange de l'adresse d'accès est plus sécurisé puisque seul le terminal autorisé à avoir accès aux données pourra accéder à l'adresse d'accès qui lui est réservée. Un autre terminal ne pourra pas avoir accès à l'adresse comportant les contenus même s'il est également dans le champ de portée du premier moyen de communication.

Ainsi, avec cette variante de réalisation, il est possible d'effectuer un partage de contenus avec plusieurs terminaux, le procédé s'appliquant alors à une pluralité de deuxièmes terminaux recevant chacun l'adresse d'accès qui leur est réservée. Ainsi, dès qu'ils sont hors de portée du champ de communication courte portée, ils ne pourront plus avoir accès à leur adresse réservée. Un seul utilisateur peut ainsi avoir le contrôle sur plusieurs utilisateurs sur l'accès à ses données.

L'invention vise un programme informatique comportant des instructions de code pour la mise en oeuvre des étapes du procédé de contrôle d'accès tel que décrit, lorsque ces instructions sont exécutées par un processeur.

L'invention concerne également un procédé de gestion d'adresse d'accès à des données stockées sur un réseau de communication. Ce procédé est tel qu'il comporte les étapes suivantes:
- réception d'une demande de création d'une adresse d'accès aux données stockées;
- création et envoi à un premier terminal de communication de l'adresse d'accès correspondante;
- désactivation de l'adresse d'accès, à la réception d'une demande de désactivation de l'adresse d'accès au réseau de communication en provenance du premier terminal suite à la détection d'une distance en dehors du champ de portée d'un premier moyen de communication courte portée entre le premier terminal et un deuxième terminal connecté à la dite adresse d'accès.

Ainsi, l'accès aux données à partager dans le réseau s'effectue via l'adresse d'accès créée qui est désactivée à l'initiative du premier terminal qui a initié le partage vers un deuxième terminal lorsqu'il détecte que le deuxième terminal est hors de portée d'un moyen de communication courte portée.

Dans un mode particulier de réalisation, le procédé comporte en outre une étape d'envoi d'une commande de changement de contenu affiché pour le deuxième terminal avant l'étape de désactivation.

Ainsi, avant la désactivation de l'adresse, l'affichage sur le deuxième terminal est modifié, avantageusement par l'affichage d'un écran d'accueil ou fond d'écran, de façon à supprimer tout accès aux données et empêcher par exemple la copie d'écran sur le deuxième terminal. La sécurité d'accès aux données est encore renforcée.

Dans un mode particulier de réalisation, la demande de création d'une adresse comporte l'identifiant d'un deuxième terminal et l'adresse d'accès aux données stockées est réservée à ce deuxième terminal.

Ainsi, une adresse d'accès réservée à un terminal permet un contrôle plus sécurisé puisque seul le terminal autorisé à avoir accès aux données pourra accéder à l'adresse d'accès qui lui est réservée. Ainsi, avec cette variante de réalisation, il est possible d'effectuer un partage de contenus avec plusieurs terminaux qui ont chacun une adresse d'accès réservée. Un seul utilisateur peut ainsi avoir le contrôle sur plusieurs utilisateurs sur l'accès à ses données.

L'invention vise un programme informatique comportant des instructions de code pour la mise en oeuvre des étapes du procédé de gestion d'adresse tel que décrit, lorsque ces instructions sont exécutées par un processeur.

L'invention vise également un dispositif de contrôle d'accès à des données stockées sur un réseau de communication, entre ledit dispositif et un deuxième dispositif, les dispositifs étant équipés d'un premier moyen de communication courte portée et d'un deuxième moyen de communication vers ledit réseau, ledit dispositif comportant:
- un module d'envoi vers le réseau de communication, d'une demande de création d'une adresse d'accès aux données stockées;
- un module de réception d'une adresse d'accès correspondante;
- un module d'envoi de l'adresse d'accès vers le deuxième terminal via le premier moyen de communication courte portée.
Le dispositif est tel qu'il comporte un module d'envoi d'une commande de désactivation de l'adresse d'accès au réseau de communication lors de la détection qu'au moins un des deux dispositifs est en dehors du champ de portée du premier moyen de communication courte portée.

Ce dispositif présente les mêmes avantages que le procédé de contrôle d'accès décrit précédemment, qu'il met en oeuvre.

L'invention concerne aussi un terminal de communication comportant un dispositif de contrôle d'accès tel que décrit.

L'invention se rapporte également à un support de stockage, lisible par un processeur, intégré ou non au dispositif de contrôle d'accès, éventuellement amovible, mémorisant un programme informatique mettant en oeuvre un procédé de contrôle d'accès tel que décrit précédemment.

L'invention vise également un dispositif de gestion d'adresse d'accès à des données stockées sur un réseau de communication, tel qu'il comprend:
- un module de réception d'une demande de création d'une adresse d'accès aux données stockées;
- un module de création d'une adresse d'accès aux données stockées et un module d'envoi à un premier terminal de communication de l'adresse d'accès correspondante;
- un module de désactivation de l'adresse d'accès mis en oeuvre à la réception par le module de réception, d'une demande de désactivation de l'adresse d'accès au réseau de communication en provenance du premier terminal, suite à la détection d'une distance en dehors du champ de portée d'un premier moyen de communication courte portée entre le premier terminal et un deuxième terminal connecté à la dite adresse d'accès.

Ce dispositif présente les mêmes avantages que le procédé de gestion d'adresse décrit précédemment, qu'il met en oeuvre.

L'invention concerne aussi un serveur d'accès comportant un dispositif de gestion d'adresse tel que décrit.

L'invention se rapporte également à un support de stockage, lisible par un processeur, intégré ou non au dispositif de gestion d'adresse, éventuellement amovible, mémorisant un programme informatique mettant en oeuvre un procédé de gestion d'adresse tel que décrit précédemment.

D'autres caractéristiques et avantages de l'invention apparaîtront plus clairement à la lecture de la description suivante, donnée uniquement à titre d'exemple non limitatif, et faite en référence aux dessins annexés, sur lesquels :
- la figure 1 illustre un système incluant un premier terminal comportant un dispositif de contrôle d'accès mettant en oeuvre le procédé de contrôle d'accès selon un mode de réalisation de l'invention, un deuxième terminal et un serveur d'accès dans un réseau de communication, comportant un dispositif de gestion d'adresse mettant en oeuvre un procédé de gestion d'adresse selon un mode de réalisation de l'invention;
- la figure 2 illustre sous forme d'organigramme les étapes du procédé de contrôle d'accès selon un mode de réalisation de l'invention ainsi que les étapes du procédé de gestion d'adresse selon un mode de réalisation de l'invention;
- la figure 3 illustre les échanges mis en oeuvre entre les terminaux et le serveur de gestion d'accès dans un réseau de communication, pour la mise en oeuvre de l'invention;
- la figure 4 illustre un exemple particulier d'application de l'invention;
- la figure 5 illustre une représentation matérielle d'un dispositif de contrôle d'accès selon un mode de réalisation de l'invention; et
- la figure 6 illustre une représentation matérielle d'un dispositif de gestion d'adresse selon un mode de réalisation de l'invention.

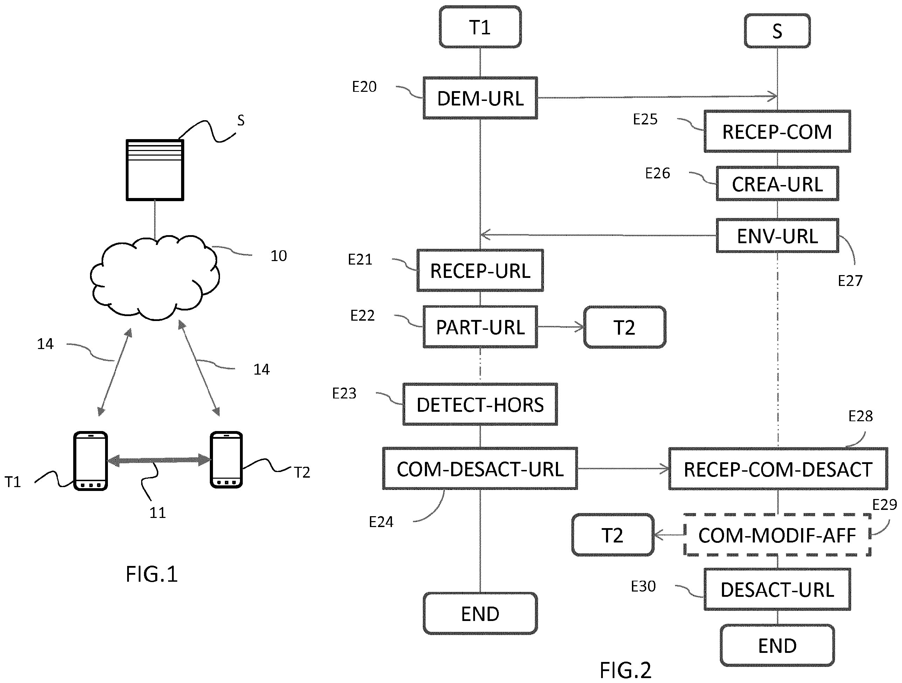

La **figure 1** représente un système de communication comprenant un premier terminal T1 et un deuxième terminal T2 représentés ici sous la forme d'un terminal téléphonique mobile mais qui peut tout aussi bien être une tablette, un ordinateur fixe ou portable, un téléviseur connecté ou tout autre équipement comportant à la fois un moyen de communication 14 vers un réseau de type Internet 10 et un moyen de communication courte portée représenté ici par la flèche 11.

Ce moyen de communication courte portée est un moyen de communication sans fil et peut par exemple être de type Bluetooth™ dont la portée est d'une dizaine de mètres, un moyen de type Infrarouge conforme par exemple à la recommandation IrDA (pour "Infrared Data Association" en anglais) dont la portée est directionnelle et d'une distance de l'ordre de 5 à 60 cm, ou encore un moyen de type WIFI conforme par exemple à la norme IEE 802.11 dont la portée est de l'ordre d'une vingtaine de mètres.

Dans un mode particulier de réalisation, ce moyen de communication courte portée est de type NFC (Pour "Near Field Communication" en anglais). Ce dernier moyen fonctionne en champ proche, c'est-à-dire lorsque les équipements sont placés à une dizaine de centimètres de distance et permet l'échange d'informations entre les équipements. Cette technologie fonctionne à haute fréquence et est définie par la norme ISO/CEI 14443. NFCIP-1 (ISO/CEI 18092) qui définit l'interface et le protocole de communication entre deux périphériques NFC, les normes ISO/CEI 14443-1 à ISO/CEI 14443-4 qui définissent la communication avec des circuits intégrés sans contact et la norme NDEF (NFC Data Exchange Format) qui définit le format d'échange logique des données.

Bien évidemment, d'autres moyens de communication courte portée peuvent être mis en oeuvre sans s'écarter de l'objet de l'invention.

Dans le système décrit en référence à la figure 1, les terminaux T1 et T2 sont par exemple équipés de cartes sans contact NFC.

Lorsqu'un des terminaux, par exemple T1 souhaite échanger ou montrer des contenus à l'utilisateur du terminal T2, les contenus étant déjà enregistrés dans le réseau de communication 10 ou envoyés dans le réseau par le terminal T1, il envoie dans un premier temps, une demande d'obtention d'une adresse d'accès aux contenus qu'il veut partager, à un serveur d'accès S dans le réseau. Celui-ci crée une adresse d'accès par exemple de type URL qu'il renvoie au terminal T1 qui en a fait la demande.

Le terminal T1 échange l'information sur l'adresse d'accès avec le terminal T2 par l'intermédiaire de la communication courte portée 11, ici, NFC. Le terminal T2 peut alors se connecter à l'adresse qu'il a reçue pour visualiser les contenus.

Cependant, dès que le terminal T2 s'éloigne du champ de portée de ce moyen de communication courte portée 11, le terminal T1 qui ne voit plus le terminal T2 dans son champ de portée NFC, envoie une commande de désactivation de l'adresse d'accès au contenu, au serveur S via le moyen de communication 14. Celui-ci désactive alors l'URL concernée. Ainsi, l'utilisateur du terminal T2 ne peut plus se connecter à l'URL qu'il a reçue puisque celle-ci n'est plus active. Il est donc sous le contrôle de l'utilisateur du terminal T1 tant qu'il est à proximité de celui-ci, une dizaine de centimètres de distance dans le cas d'une communication NFC.

Une application possible est par exemple la proposition de visualisation de photos d'un utilisateur 1 à un utilisateur 2, les photos étant enregistrées sur le réseau dans un espace de stockage appartenant à l'utilisateur 1. L'utilisateur ne veut cependant pas que l'utilisateur 2 ait accès à ses photos en dehors de chez lui et en dehors de son contrôle. Il ne veut pas que l'utilisateur 2 transfère l'adresse de stockage à une autre personne ou même ne fasse partager la visualisation des photos à d'autres personnes.

Ainsi, le terminal T1 met en oeuvre un procédé de contrôle d'accès pour transférer l'adresse de stockage des photos au terminal T2 et demander la désactivation de cette adresse de stockage dans le cas où le terminal T2 s'est éloigné du champ de portée de la communication courte portée.

De même, si l'utilisateur 1 est au domicile de l'utilisateur 2, il peut partager la visualisation de ses photos, par exemple sur le téléviseur de l'utilisateur T2 via une liaison NFC ou Bluetooth et désactiver l'adresse URL où sont consultables ces photos, quand il sort du champ courte portée de la liaison NFC ou Bluetooth du terminal T2, par exemple quand l'utilisateur 1 quitte le domicile de l'utilisateur 2.

L'utilisateur du terminal T1 peut ainsi contrôler l'utilisateur du terminal T2 sur la visualiser de ses photos qui ne peut avoir lieu que quand celui-ci est à proximité du terminal T1.

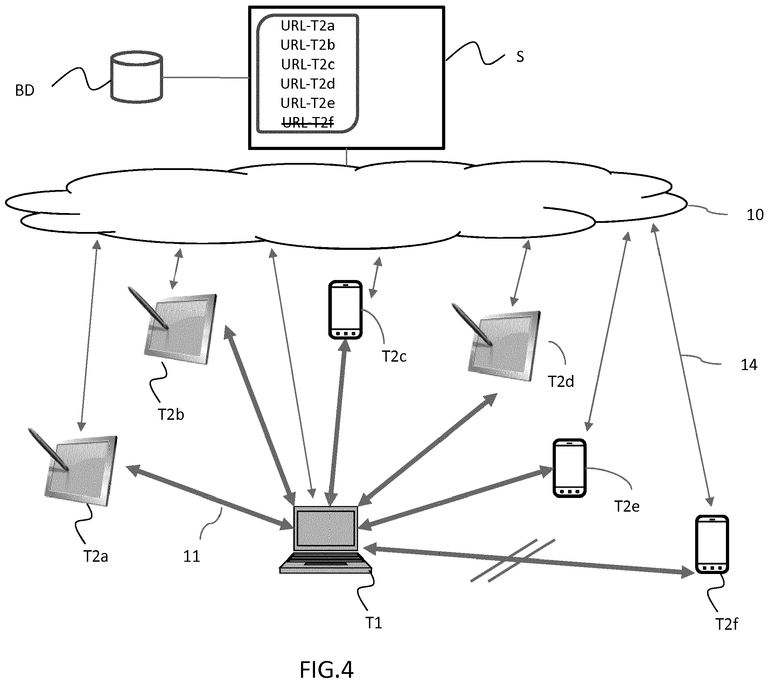

Ce système peut bien sûr comporter une pluralité de terminaux T2 qui obtiennent l'information sur l'adresse d'accès via une communication courte portée avec le terminal T1. Un exemple d'application dans ce type de configuration sera décrit ultérieurement en référence à la figure 4.

La **figure 2** illustre les étapes principales du procédé de contrôle d'accès mises en oeuvre dans le terminal T1 de la figure 1 et les étapes principales du procédé de gestion d'adresse mises en oeuvre dans le serveur d'accès S de la figure 1.

Ainsi, une étape E20 d'envoi d'une demande de création d'une adresse d'accès à des données prédéterminées et stockées dans une base de données du réseau est effectuée par le terminal T1. Une sélection au préalable des données à partager peut être effectuée par l'utilisateur du terminal T1 par la création par exemple d'un répertoire particulier dans l'espace de stockage du réseau. Le terminal peut également, en même temps qu'il demande l'adresse d'accès, envoyer les données qu'il souhaite partager, au serveur d'accès S.

Une étape E21 de réception d'une adresse de consultation de ces données est effectuée par le terminal T1. La communication entre le terminal T1 et le serveur d'accès S se fait via un moyen de communication longue portée, par exemple par le biais d'Internet.

L'adresse de consultation des données, par exemple une adresse URL, est ensuite envoyée à l'étape E22 à un dispositif T2 par un moyen de communication courte portée, par exemple une liaison NFC.

Une étape E23 de détection que le terminal T2 ou le terminal T1 s'éloigne du champ de portée de la communication courte portée, ici NFC, est effectuée. Pour cela, le terminal T1 vérifie à intervalle de temps régulier si la connexion NFC est toujours disponible entre les terminaux. Dès que cette connexion NFC n'est plus effectuée, alors cela veut dire que le terminal T2 est hors du champ de portée du NFC. Dans ce cas, l'étape E24 est mise en oeuvre. A cette étape, une commande de désactivation de l'URL des données partagées est envoyée au serveur d'accès.

Le serveur d'accès met en oeuvre de façon concomitante, le procédé de gestion d'adresse d'accès aux données stockées sur une base de données et appartenant à l'utilisateur du terminal T1.

A l'étape E25, il reçoit une commande de création d'une adresse pour des données prédéterminées. A l'étape E26, l'adresse correspondante est créée et une URL est déterminée pour accéder à ces données.

Dans un mode possible de réalisation, le répertoire comportant les données à partager est recopié à une adresse nouvelle qui est l'adresse d'accès créée. Typiquement, cette adresse est une adresse URL. Dans un autre mode de réalisation, l'adresse URL créée comporte des pointeurs qui viennent pointer sur les données à partager dans une base de données ou répertoire accessible par le serveur.

A l'étape E27, l'adresse URL ainsi déterminée est envoyée au terminal T1 qui en a fait la demande.

Le terminal T2 qui aura reçu cette adresse URL via la connexion courte portée qu'il a en commun avec le terminal T1 peut alors se connecter à l'adresse URL pour consulter les données stockées. Le serveur effectue alors régulièrement des étapes de rafraichissement des données envoyées au terminal T2.

Dans un mode préféré, l'adresse URL ne permet que de consulter les contenus stockés et ne donne pas la possibilité de modifier, supprimer ou télécharger ces contenus. Le contrôle sur les contenus est alors assuré.

A l'étape E28, le serveur S reçoit une commande de désactivation de l'adresse URL suite à la détection d'une distance en dehors du champ de portée de la connexion NFC, entre le terminal T1 et le terminal T2.

Le serveur S met alors en oeuvre une étape E30 de désactivation de l'URL. Dans un mode particulier, il efface le lien vers le répertoire de l'adresse qu'il a crée pour les données concernées. L'URL pointe alors sur un espace de stockage vide. Lorsque l'URL comporte des pointeurs sur une base de données, la désactivation revient à supprimer les pointeurs.

Dans un mode particulier de réalisation, avant l'étape de désactivation de l'adresse, une commande de changement de contenu à afficher sur l'écran du terminal T2 est effectuée en E29, de façon à éviter que l'écran n'affiche encore les données de l'adresse même lorsque T2 est hors de portée de la connexion courte portée NFC.

De façon avantageuse, le serveur peut forcer le terminal T2 à vider sa mémoire cache où peuvent être stockées les données avant d'être affichées et à afficher par exemple une page vierge, la page d'accueil du terminal ou son fond d'écran prédéfini.

Pour cela, il envoie une commande, par exemple de type "html" qui interdit au terminal qui la reçoit de mettre le contenu affiché dans une mémoire cache et une commande qui force le rafraichissement de l'affichage

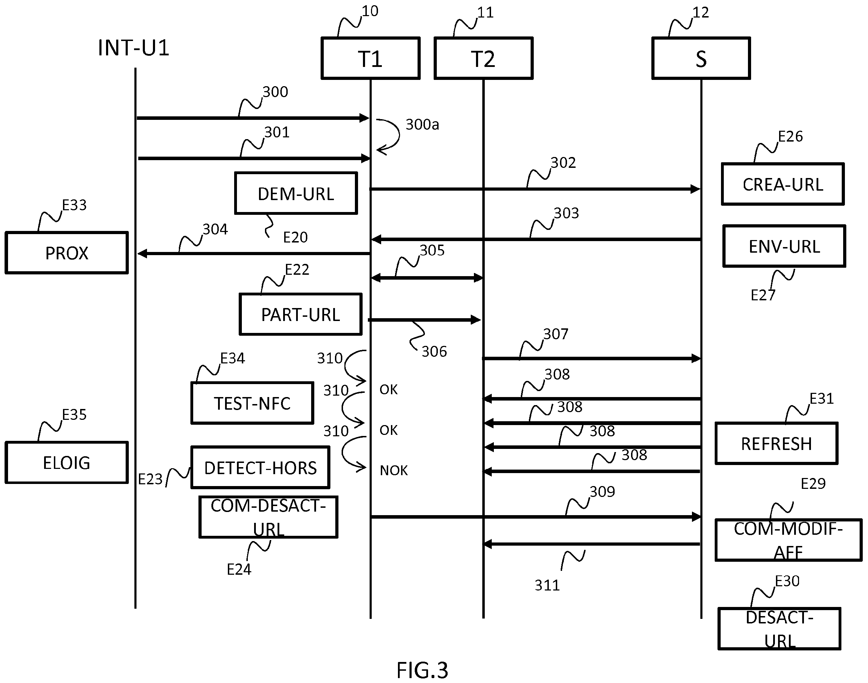

La **figure 3** illustre un exemple d'échanges d'informations entre les différentes entités du système pour d'une part mettre en oeuvre le procédé de contrôle d'accès et d'autre part, le procédé de gestion d'adresse selon l'invention.

Ainsi, dans un premier temps, sur l'interface utilisateur du terminal T1 (INT-U1), l'utilisateur choisit de démarrer par une action 300 une application de partage contrôlée de données. L'application se met en oeuvre (300a) et demande, par exemple, à l'utilisateur de choisir ces données à partager.

L'utilisateur du terminal T1, via l'interface, choisit par l'action 301 les contenus à partager.

Le terminal T1 envoie alors par un message 302, une commande de création d'une adresse de consultation pour les contenus ainsi choisis. Cet envoi de message correspond à l'étape E20 de la figure 2. Le serveur d'accès du réseau qui reçoit ce message, crée une adresse correspondant au contenu. Il crée ainsi une URL. Cela correspond à l'étape E26 de la figure 2.

Dans un mode de réalisation particulier, cette adresse d'accès peut avoir une durée de validité prédéterminée. Dans ce cas, l'URL est associée à un minuteur ("timer" en anglais).

Ceci a pour effet de renforcer la sécurité d'accès au contenu. La désactivation de l'URL se faisant alors automatiquement à l'issue de ce temps prédéterminé.

Dans une variante de réalisation, l'URL créée peut aussi être associée à un terminal particulier.

Par exemple, le terminal T1 peut détecter les terminaux qui sont dans le champ de portée du moyen de communication courte portée (NFC, Bluetooth, WIFI, etc...) et envoyer les identifiants des terminaux avec lesquels il souhaite partager les contenus. Le serveur d'accès du réseau crée alors une URL par terminal identifié. Celui-ci ne pourra accéder à l'URL que grâce à son identifiant.

Le serveur envoie ensuite par le message 303, l'URL ou les adresses URL ainsi créées au terminal T1. Ceci correspond à l'étape E27 de la figure 2.

Sur l'interface du Terminal T1 est alors affiché (304) une consigne de rapprochement du terminal T1 à un autre terminal pour que celui-ci soit dans le champ de portée du moyen de communication courte portée qu'ils ont en commun.

L'utilisateur 1 rapproche ainsi son terminal T1 vers un terminal T2 par une action E33.

L'établissement de la liaison courte portée s'effectue par des échanges d'informations 305 entre T1 et T2, de façon classique et selon les protocoles de la liaison courte portée mise en oeuvre.

Le terminal T1 partage l'information sur l'adresse d'accès URL qu'il a reçu, avec le terminal T2 via la liaison courte portée. Ceci correspond à l'étape E22 de la figure 2.

L'adresse d'accès est ainsi envoyée à T2 par le message 306. T2 peut ainsi consulter en 307 les contenus via l'adresse d'accès qu'il a reçu en se connectant au réseau de communication.

Tant que les deux terminaux sont à une distance comprise dans le champ de portée de la liaison courte portée, les données sont régulièrement rafraichies par le serveur d'accès par des actions schématisées par des flèches 308 et l'étape E31.

En même temps, le terminal T1 vérifie de façon régulière que le terminal T2 est toujours dans le champ de portée de la communication courte portée par des actions schématisées par les flèches 310 et l'étape E34.

Dès que cette vérification indique que la distance entre les deux terminaux est hors du champ de portée (étape E23 de la figure 2), parce qu'un des terminaux s'est écarté de l'autre (E35), alors le terminal T1 envoie une commande de désactivation de l'adresse d'accès (étape E24 de la figure 2) par un message représenté par la flèche 309, au serveur S.

Celui-ci, dans un mode particulier de réalisation envoie dans un premier temps, une commande de modification (311) de l'affichage sur le terminal T2 qui est connecté à l'adresse URL partagée (étape E29 sur la figure 2). Pour cela, il demande par exemple à vider le cache mémoire et de rafraichir l'affichage de l'écran. L'écran aura alors une page vierge ou un affichage de fond d'écran du terminal.

Dans un deuxième temps, le serveur désactive l'URL (étape E30) par exemple en supprimant les répertoires de données qui avaient été recopiés à l'adresse URL en question.

Ainsi, le terminal T2 ne peut plus avoir accès aux contenus puisque l'adresse d'accès n'existe plus.

La **figure 4** illustre un exemple d'application de l'invention dans le cas où un terminal T1 souhaite partager des contenus avec plusieurs terminaux T2 (T2a à T2f). Cette situation peut par exemple se présenter dans une salle de classe avec un professeur et des élèves, dans une salle de conférence avec un intervenant et plusieurs personnes ou encore dans une bibliothèque avec un administrateur des documents de la bibliothèque et des personnes membres de cette bibliothèque.

Pour cet exemple d'application, la communication courte portée (11) mise en oeuvre entre les terminaux est de type Bluetooth ou WIFI, qui ne nécessite pas une proximité trop importante. Dans cet exemple d'application, l'utilisateur du terminal T1 choisit dans un premier temps les contenus qu'il souhaite partager.

Il met en oeuvre une commande de découverte des terminaux qui sont dans le champ de portée du moyen de communication courte portée qu'il actionne. Cette action de découverte est bien connue des systèmes de communication courte portée précités. Une liste d'identifiants de terminaux apparait donc sur l'écran du terminal T1 qui peut sélectionner ceux avec lesquels il souhaite partager les contenus. Les identifiants de ces terminaux sont ensuite envoyés au serveur d'accès du réseau de communication avec une demande de création d'adresses URL pour les contenus choisis et pour les terminaux sélectionnés.

Dans un mode de réalisation simplifié, le serveur S crée une seule adresse URL à partager avec les terminaux de la liste.

Dans un autre mode de réalisation, le serveur d'accès S crée une adresse URL pour chacun des terminaux (URL-T2a à URL-T2f) en associant l'identifiant du terminal à l'adresse d'accès aux contenus. Ainsi, l'accès à l'URL par un terminal est conditionné à l'identifiant qu'il possède.

Dans un mode de réalisation particulier, un mot de passe est aussi associé à l'URL réservée pour un terminal. Le mot de passe est différent pour chacun des terminaux qui ne pourra se connecter à l'URL qu'en fournissant à la fois son identifiant et son mot de passe. Ceci accroit le contrôle sur le partage des données.

Lorsque le serveur d'accès a créé les adresses URL, il les envoie au terminal T1. Celui-ci, envoie à chacun des terminaux, l'URL commune ou celle qui lui correspond par la liaison courte portée. Il peut dans une variante de réalisation, envoyer toute la liste des adresses URL à tous les terminaux. C'est alors aux terminaux de sélectionner l'URL qui correspond à son identifiant. Il ne pourra de toute façon pas se connecter à l'URL d'un autre terminal puisqu'il ne possède pas son identifiant.

Les terminaux qui ont ainsi une adresse pour consulter les contenus que l'utilisateur de T1 (professeur, administrateur de la bibliothèque ou intervenant de conférence) veut faire partager, peuvent ainsi se connecter à l'adresse qui leur est réservée via une connexion réseau 14. L'identifiant du terminal peut être envoyé automatiquement à la connexion du terminal T2 sur le réseau de communication pour consulter l'adresse URL.

Cette consultation sur le réseau des différents terminaux T2 s'effectue tant que ces terminaux sont dans le champ de portée de la communication courte portée Bluetooth ou WIFI de la salle de classe, de conférence ou de la bibliothèque dans les cas d'usage décrits ici.

Dès lors qu'un des terminaux est en dehors de ce champ de portée, par exemple, le terminal T2f illustré à la figure 4, alors le terminal T1 reçoit cette information de disparition du terminal dans le champ de portée. En effet, une surveillance régulière du terminal T1 sur les terminaux dans le champ de portée de la liaison Bluetooth ou WIFI est effectuée.

Dans ce cas, le terminal T1 envoie une commande de désactivation de l'adresse URL du terminal qui n'est plus dans le champ de portée, ici le terminal T2f, au serveur S qui désactive l'URL correspondante (URL-T2f). L'identifiant du terminal qui n'est plus dans le champ de portée de la connexion courte portée est envoyé par exemple en même temps que la commande de désactivation pour que le serveur ne désactive que l'URL concernée.

Dans un autre cas d'usage, c'est le terminal T1 qui une fois le cours terminé, ou la conférence par exemple, sort du champ de portée de la communication courte portée des autres terminaux. Dans ce cas, il demande la désactivation de toutes les adresses URL créées de façon à cesser le partage des données.

Dans le cas où une seule adresse URL est commune aux différents terminaux T2, alors la demande de désactivation faite par le terminal T1 peut s'effectuer à la détection de l'éloignement du premier terminal de la liste de terminaux T2, en dehors du champ de portée de la liaison courte portée, ou encore à la détection du dernier terminal de la liste ou bien lorsque que le terminal T1 sort du champ de portée.

Le serveur désactive ainsi les adresses demandées. Il peut avant la désactivation, demander à vider les mémoires cache des terminaux et un rafraichissement de l'affichage pour que ceux-ci n'aient plus de traces sur les données partagées.

Ce cas d'usage impliquant une pluralité de terminaux permet à l'utilisateur du terminal T1 qui souhaite partager ses contenus, d'avoir le contrôle sur ce partage et pour plusieurs personnes. Il est assuré que ses données ne peuvent pas être consultées en dehors d'un périmètre bien défini. Le champ de portée de la communication courte portée peut, par ailleurs, être configuré pour avoir un périmètre bien déterminé. Ainsi, il peut être configuré par exemple pour correspondre au périmètre d'une salle de cours ou de conférence.

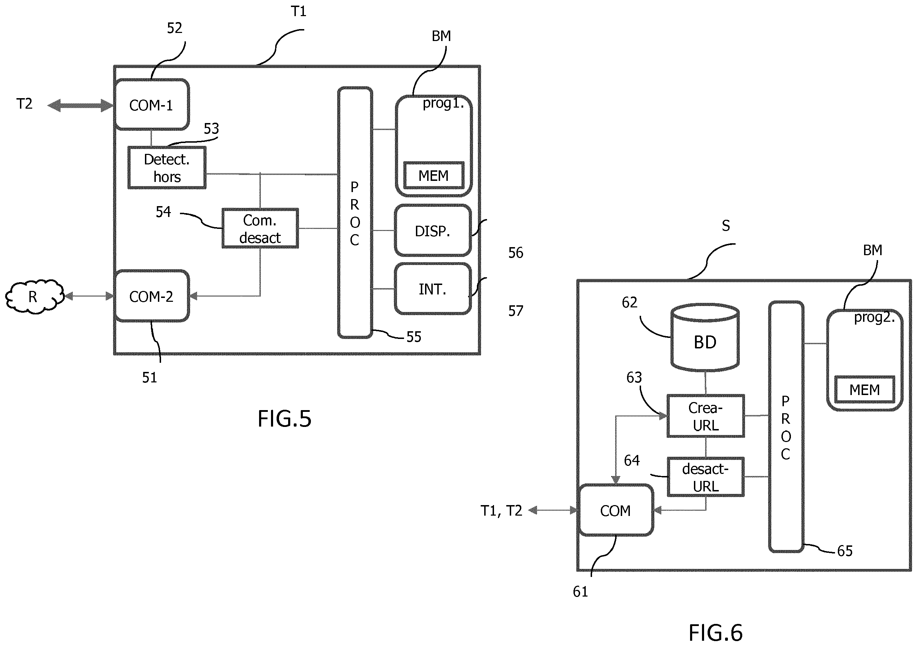

La **figure 5** illustre à présent une représentation matérielle d'un dispositif de contrôle d'accès T1 selon l'invention. Ce dispositif peut être intégré à un terminal de communication par exemple terminal de communication mobile, ordinateur, PDA, tablette ou autre équipement.

Ce dispositif met en oeuvre le procédé de contrôle d'accès décrit en référence à la figure 2 par les étapes principales E20 à E24.

Il possède un module de communication 52 permettant de mettre en oeuvre un premier moyen de communication (COM-1) courte portée qui peut être par exemple un module NFC, une carte Bluetooth ou WIFI. Ce moyen de communication courte portée permet d'échanger des informations avec un autre équipement possédant la même interface de communication, lorsque celui-ci est dans le champ de portée de cette communication (environ 10cm pour le NFC, 10m pour le Bluetooth et 20m pour le WIFI).

Le dispositif comporte également un module de communication 51 permettant de mettre en oeuvre un deuxième moyen de communication (COM-2), cette fois ci vers un réseau de communication R, par exemple de type Internet.

Matériellement, ce dispositif T1 comporte un processeur 55 coopérant avec un bloc mémoire BM comportant une mémoire de stockage et/ou de travail MEM.

Le processeur pilote des modules de traitement aptes à mettre en oeuvre le procédé selon l'invention. Ainsi, ce dispositif comporte un module 51 d'envoi vers le réseau de communication, d'une demande de création d'une adresse d'accès aux données stockées et de réception d'une adresse d'accès correspondante, un module 52 d'envoi de l'adresse d'accès vers un deuxième terminal via le premier moyen de communication courte portée, un module 53 de détection qu'au moins un des deux dispositifs est en dehors du champ de portée du premier moyen de communication courte portée et un module 54 d'envoi d'une commande de désactivation de l'adresse d'accès au réseau de communication.

Le bloc mémoire peut avantageusement comporter un programme informatique (prog1.) comportant des instructions de code pour la mise en oeuvre des étapes du procédé de contrôle d'accès au sens de l'invention, lorsque ces instructions sont exécutées par le processeur PROC et notamment les étapes d'envoi vers le réseau de communication, d'une demande de création d'une adresse d'accès aux données stockées, de réception d'une adresse d'accès correspondante, d'envoi de l'adresse d'accès vers le deuxième terminal via le premier moyen de communication courte portée et d'envoi d'une commande de désactivation de l'adresse d'accès au réseau de communication lors de la détection qu'au moins un des deux terminaux est en dehors du champ de portée du premier moyen de communication courte portée.

Typiquement, la description de la figure 2 reprend les étapes d'un algorithme d'un tel programme informatique. Le programme informatique peut également être stocké sur un support mémoire lisible par un lecteur du dispositif ou téléchargeable dans l'espace mémoire de celui-ci.

La mémoire MEM enregistre de manière générale, toutes les données nécessaires à la mise en oeuvre du procédé de contrôle d'accès.

Le dispositif possède également un écran 56 apte à afficher les contenus à partager où les informations permettant le partage de ces contenus et une interface utilisateur 57 permettant le contrôle par celui-ci du dispositif.

La **figure 6** illustre à présent une représentation matérielle d'un dispositif S de gestion d'adresse selon l'invention. Ce dispositif peut être intégré à un serveur d'accès dans un réseau de communication ou tout autre serveur ou équipement ayant accès à des bases de données de contenus.

Ce dispositif met en oeuvre le procédé de gestion d'adresse décrit en référence à la figure 2 par les étapes principales E25 à E30.

Il possède un module de communication 51 permettant de communiquer avec d'autres équipements du réseau de communication, par exemple de type Internet.

Matériellement, ce dispositif S comporte un processeur 65 coopérant avec un bloc mémoire BM comportant une mémoire de stockage et/ou de travail MEM.

Le processeur pilote des modules de traitement aptes à mettre en oeuvre le procédé selon l'invention. Ainsi, ce dispositif comporte un module 51 de réception d'une demande de création d'une adresse d'accès aux données stockées, un module 63 de création d'une adresse d'accès aux données stockées en lien avec une base de données 62, un module 61 d'envoi à un premier terminal de communication de l'adresse d'accès correspondante, un module 64 de désactivation de l'adresse d'accès mis en oeuvre à la réception par le module de réception 61, d'une demande de désactivation de l'adresse d'accès au réseau de communication en provenance du premier terminal, suite à la détection d'une distance en dehors du champ de portée d'un premier moyen de communication courte portée entre le premier terminal et un deuxième terminal connecté à la dite adresse d'accès.

Le bloc mémoire peut avantageusement comporter un programme informatique (prog2.) comportant des instructions de code pour la mise en oeuvre des étapes du procédé de gestion d'adresse au sens de l'invention, lorsque ces instructions sont exécutées par le processeur PROC et notamment les étapes de réception d'une demande de création d'une adresse d'accès aux données stockées, de création et d'envoi à un premier terminal de communication de l'adresse d'accès correspondante et à la réception d'une demande de désactivation de l'adresse d'accès au réseau de communication en provenance du premier terminal suite à la détection d'une distance en dehors du champ de portée d'un premier moyen de communication courte portée entre le premier terminal et un deuxième terminal connecté à la dite adresse d'accès, de désactivation de l'adresse d'accès.

Typiquement, la description de la figure 2 reprend les étapes d'un algorithme d'un tel programme informatique. Le programme informatique peut également être stocké sur un support mémoire lisible par un lecteur du dispositif ou téléchargeable dans l'espace mémoire de celui-ci.

La mémoire MEM enregistre de manière générale, toutes les données nécessaires à la mise en oeuvre du procédé de gestion d'adresse.

## Revendications

1. Procédé de contrôle d'accès à des données stockées sur un réseau de communication, entre un premier et un deuxième terminal, les terminaux étant équipés d'un premier moyen de communication courte portée et d'un deuxième moyen de communication vers ledit réseau, le procédé comprenant les étapes suivantes:
- envoi (E20) vers le réseau de communication, par le premier terminal, d'une demande de création d'une adresse d'accès aux données stockées;
- création (E26), par un dispositif de gestion, et envoi (E27) au premier terminal de communication de l'adresse d'accès correspondante;
- envoi (E22), par le premier terminal, de l'adresse d'accès vers le deuxième terminal via le premier moyen de communication courte portée;
le procédé comportant une étape d'envoi (E24), par le premier terminal, d'une commande de désactivation de l'adresse d'accès au dispositif de gestion lors de la détection (E23), par le premier terminal, qu'au moins un des deux terminaux est en dehors du champ de portée du premier moyen de communication courte portée ;
- envoi (E29) par le dispositif de gestion d'une commande de changement de contenu affiché pour le deuxième terminal ; puis
- désactivation (E30) par le dispositif de gestion, de l'adresse d'accès.

2. Procédé selon la revendication 1, **caractérisé en ce que** l'adresse d'accès aux données stockées sur le réseau est une adresse temporaire d'une durée prédéterminée.

3. Procédé selon la revendication 1, **caractérisé en ce que** le premier moyen de communication courte portée est un moyen de type NFC.

4. Procédé selon la revendication 1, **caractérisé en ce que** la demande de création d'une adresse comporte l'identifiant d'un deuxième terminal et **en ce que** l'adresse d'accès aux données stockées sur le réseau est une adresse réservée à ce deuxième terminal.

5. Procédé selon la revendication 4, **caractérisé en ce qu'**il s'applique à une pluralité de deuxièmes terminaux recevant chacun l'adresse d'accès qui leur est réservée.

6. Programme informatique comportant des instructions de code pour la mise en oeuvre des étapes du procédé de contrôle d'accès selon des revendications 1 à 5.

7. Procédé de gestion d'adresse d'accès à des données stockées sur un réseau de communication, comportant les étapes suivantes:
- réception (E25) en provenance d'un premier terminal, par un dispositif de gestion, d'une demande de création d'une adresse d'accès aux données stockées;
- création (E26) et envoi (E27), par le dispositif de gestion, au premier terminal de communication de l'adresse d'accès correspondante, le procédé comportant en outre les étapes suivantes :
- réception (E28), par le dispositif de gestion, d'une demande de désactivation de l'adresse d'accès au réseau de communication en provenance du premier terminal, suite à la détection, par le premier terminal, d'une distance en dehors du champ de portée d'un premier moyen de communication courte portée entre le premier terminal et un deuxième terminal connecté à la dite adresse d'accès ;
- envoi (E29), par le dispositif de gestion, d'une commande de changement de contenu affiché pour le deuxième terminal ;puis
- désactivation (E30), par le dispositif de gestion, de l'adresse d'accès.

8. Procédé selon la revendication 7, **caractérisé en ce que** la demande de création d'une adresse comporte l'identifiant d'un deuxième terminal et **en ce que** l'adresse d'accès aux données stockées est réservée à ce deuxième terminal.

9. Programme informatique comportant des instructions de code pour la mise en oeuvre des étapes du procédé de gestion d'adresse selon l'une des revendications 7 à 8.

10. Système de contrôle d'accès à des données stockées sur un réseau de communication, entre un premier et deuxième terminal appartenant au système de contrôle d'accès, les terminaux étant équipés d'un premier moyen de communication courte portée et d'un deuxième moyen de communication vers ledit réseau, ledit système comportant:
- un module d'envoi (51) du premier terminal, apte à envoyer vers le réseau de communication, une demande de création d'une adresse d'accès aux données stockées;
- un dispositif de gestion comprenant un module de création (63) apte à créer une adresse d'accès aux données stockées et un module d'envoi (61) apte à envoyer au premier terminal de communication, l'adresse d'accès correspondante;
- un module d'envoi (52) du premier terminal apte à envoyer l'adresse d'accès vers le deuxième terminal via le premier moyen de communication courte portée; le système étant tel que que le module d'envoi (51) du premier terminal est apte à envoyer vers le dispositif de gestion, une commande de désactivation de l'adresse d'accès au réseau de communication lors de la détection (53), par le premier terminal, qu'au moins un des deux terminaux est en dehors du champ de portée du premier moyen de communication courte portée ; et en ce que le dispositif de gestion comporte un module d'envoi (61) apte à envoyer une commande de changement de contenu affiché pour le deuxième terminal et un module de désactivation (64) apte à désactiver l'adresse d'accès, suite à l'envoi de la commande de changement de contenu affiché.

11. Système comportant un premier terminal et un dispositif de gestion d'adresse d'accès à des données stockées sur un réseau de communication, le dispositif comprenant:
- un module de réception (61) d'une demande de création d'une adresse d'accès aux données stockées;
- un module de création (63) d'une adresse d'accès aux données stockées et un module d'envoi (61) à un premier terminal de communication de l'adresse d'accès correspondante; le premier terminal comprenant un module de détection d'une distance en dehors du champ de portée d'un premier moyen de communication courte portée entre le premier terminal et un deuxième terminal, connecté à la dite adresse d'accès; le
dispositif comprenant en outre :
- un module de réception (61) d'une demande de désactivation de l'adresse d'accès au réseau de communication en provenance du premier terminal, suite à la détection, par le module de détection, d'une distance en dehors du champ de portée d'un premier moyen de communication courte portée entre le premier terminal et un deuxième terminal connecté à la dite adresse d'accès ;
- un module d'envoi d'une commande de changement de contenu affiché pour le deuxième terminal ;
- un module de désactivation (64) de l'adresse d'accès mis en oeuvre suite à l'envoi de la commande de changement de contenu affiché.

12. Système selon la revendication 11 **caractérisé en ce qu'**un serveur d'accès dans un réseau de communication, comporte le dispositif de gestion d'adresse.

## Patentansprüche

1. Verfahren zur Kontrolle des Zugriffs auf Daten, die in einem Kommunikationsnetz zwischen einem ersten und einem zweiten Endgerät gespeichert sind, wobei die Endgeräte mit einem ersten Kommunikationsmittel kurzer Reichweite und mit einem zweiten Kommunikationsmittel zur Kommunikation mit dem Netz ausgestattet sind, wobei das Verfahren die folgenden Schritte umfasst:
- Senden (E20) an das Kommunikationsnetz, durch das erste Endgerät, einer Anforderung zur Erzeugung einer Zugriffsadresse für die gespeicherten Daten;
- Erzeugung (E26), durch eine Verwaltungsvorrichtung, der entsprechenden Zugriffsadresse und Senden (E27) derselben an das erste Kommunikationsendgerät;
- Senden (E22), durch das erste Endgerät, der Zugriffsadresse über das erste Kommunikationsmittel kurzer Reichweite an das zweite Endgerät,
wobei das Verfahren einen Schritt des Sendens (E24), durch das erste Endgerät, eines Befehls zur Deaktivierung der Zugriffsadresse an die Verwaltungsvorrichtung bei der Detektion (E23), durch das erste Endgerät, dass sich wenigstens eines der zwei Endgeräte außerhalb der Funkreichweite des ersten Kommunikationsmittels kurzer Reichweite befindet, umfasst;
- Senden (E29), durch die Verwaltungsvorrichtung, eines Befehls zur Änderung des Inhalts, der für das zweite Endgerät angezeigt wird; danach
- Deaktivierung (E30), durch die Verwaltungsvorrichtung, der Zugriffsadresse.

2. Verfahren nach Anspruch 1, **dadurch gekennzeichnet, dass** die Zugriffsadresse für die im Netz gespeicherten Daten eine temporäre Adresse von einer vorbestimmten Dauer ist.

3. Verfahren nach Anspruch 1, **dadurch gekennzeichnet, dass** das erste Kommunikationsmittel kurzer Reichweite ein Mittel vom Typ NFC ist.

4. Verfahren nach Anspruch 1, **dadurch gekennzeichnet, dass** die Anforderung zur Erzeugung einer Adresse die Kennung eines zweiten Endgerätes umfasst, und dadurch, dass die Zugriffsadresse für die im Netz gespeicherten Daten eine für dieses zweite Endgerät reservierte Adresse ist.

5. Verfahren nach Anspruch 4, **dadurch gekennzeichnet, dass** es für mehrere zweite Endgeräte angewendet wird, die jeweils die Zugriffsadresse empfangen, welche für sie reserviert ist.

6. Computerprogramm, welches Codeanweisungen zur Durchführung der Schritte des Verfahrens zur Kontrolle des Zugriffs nach einem der Ansprüche 1 bis 5 umfasst.

7. Verfahren zur Verwaltung einer Zugriffsadresse für in einem Kommunikationsnetz gespeicherte Daten, welches die folgenden Schritte umfasst:
- Empfang (E25), von einem ersten Endgerät, durch eine Verwaltungsvorrichtung, einer Anforderung zur Erzeugung einer Zugriffsadresse für die gespeicherten Daten;
- Erzeugung (E26), durch die Verwaltungsvorrichtung, der entsprechenden Zugriffsadresse und Senden (E27) derselben an das erste Kommunikationsendgerät, wobei das Verfahren außerdem die folgenden Schritte umfasst:
- Empfang (E28), durch die Verwaltungsvorrichtung, einer Anforderung zur Deaktivierung der Zugriffsadresse für das Kommunikationsnetz von dem ersten Endgerät im Anschluss an die Detektion, durch das erste Endgerät, einer außerhalb der Funkreichweite eines ersten Kommunikationsmittels kurzer Reichweite liegenden Entfernung zwischen dem ersten Endgerät und einem zweiten Endgerät, das mit der besagten Zugriffsadresse verbunden ist;
- Senden (E29), durch die Verwaltungsvorrichtung, eines Befehls zur Änderung des Inhalts, der für das zweite Endgerät angezeigt wird; danach
- Deaktivierung (E30), durch die Verwaltungsvorrichtung, der Zugriffsadresse.

8. Verfahren nach Anspruch 7, **dadurch gekennzeichnet, dass** die Anforderung zur Erzeugung einer Adresse die Kennung eines zweiten Endgerätes umfasst, und dadurch, dass die Zugriffsadresse für die gespeicherten Daten für dieses zweite Endgerät reserviert ist.

9. Computerprogramm, welches Codeanweisungen zur Durchführung der Schritte des Verfahrens zur Verwaltung einer Adresse nach einem der Ansprüche 7 bis 8 umfasst.

10. System zur Kontrolle des Zugriffs auf Daten, die in einem Kommunikationsnetz zwischen einem ersten und einem zweiten Endgerät, die zu dem System zur Kontrolle des Zugriffs gehören, gespeichert sind, wobei die Endgeräte mit einem ersten Kommunikationsmittel kurzer Reichweite und mit einem zweiten Kommunikationsmittel zur Kommunikation mit dem Netz ausgestattet sind, wobei das System aufweist:
- ein Sendemodul (51) des ersten Endgerätes, das geeignet ist, an das Kommunikationsnetz eine Anforderung zur Erzeugung einer Zugriffsadresse für die gespeicherten Daten zu senden;
- eine Verwaltungsvorrichtung, die ein Erzeugungsmodul (63), das geeignet ist, eine Zugriffsadresse für die gespeicherten Daten zu erzeugen, und ein Sendemodul (61), das geeignet ist, die entsprechende Zugriffsadresse an das erste Kommunikationsendgerät zu senden, umfasst;
- ein Sendemodul (52) des ersten Endgerätes, das geeignet ist, die Zugriffsadresse über das erste Kommunikationsmittel kurzer Reichweite an das zweite Endgerät zu senden;
wobei das System so beschaffen ist, dass das Sendemodul (51) des ersten Endgerätes geeignet ist, an die Verwaltungsvorrichtung einen Befehl zur Deaktivierung der Zugriffsadresse für das Kommunikationsnetz bei der Detektion (53), durch das erste Endgerät, dass sich wenigstens eines der zwei Endgeräte außerhalb der Funkreichweite des ersten Kommunikationsmittels kurzer Reichweite befindet, zu senden; und dadurch, dass die Verwaltungsvorrichtung ein Sendemodul (61), das geeignet ist, einen Befehl zur Änderung des Inhalts, der für das zweite Endgerät angezeigt wird, zu senden, und ein Deaktivierungsmodul (64), das geeignet ist, im Anschluss an das Senden des Befehls zur Änderung des angezeigten Inhalts die Zugriffsadresse zu deaktivieren, aufweist.

11. System, welches ein erstes Endgerät und eine Vorrichtung zur Verwaltung einer Zugriffsadresse für in einem Kommunikationsnetz gespeicherte Daten aufweist, wobei die Vorrichtung umfasst:
- ein Modul zum Empfang (61) einer Anforderung zur Erzeugung einer Zugriffsadresse für die gespeicherten Daten;
- ein Modul zur Erzeugung (63) einer Zugriffsadresse für die gespeicherten Daten und ein Modul zum Senden (61) der entsprechenden Zugriffsadresse an ein erstes Kommunikationsendgerät; wobei das erste Endgerät ein Modul zur Detektion einer außerhalb der Funkreichweite eines ersten Kommunikationsmittels kurzer Reichweite liegenden Entfernung zwischen dem ersten Endgerät und einem zweiten Endgerät, das mit der besagten Zugriffsadresse verbunden ist, umfasst; wobei die Vorrichtung außerdem umfasst:
- ein Modul zum Empfang (61) einer Anforderung zur Deaktivierung der Zugriffsadresse für das Kommunikationsnetz von dem ersten Endgerät im Anschluss an die Detektion, durch das Detektionsmodul, einer außerhalb der Funkreichweite eines ersten Kommunikationsmittels kurzer Reichweite liegenden Entfernung zwischen dem ersten Endgerät und einem zweiten Endgerät, das mit der besagten Zugriffsadresse verbunden ist;
- ein Modul zum Senden eines Befehls zur Änderung des Inhalts, der für das zweite Endgerät angezeigt wird;
- ein Modul zur Deaktivierung (64) der Zugriffsadresse, die im Anschluss an das Senden des Befehls zur Änderung des angezeigten Inhalts durchgeführt wird.

12. System nach Anspruch 11, **dadurch gekennzeichnet, dass** ein Zugangsserver in einem Kommunikationsnetz die Vorrichtung zur Verwaltung einer Adresse aufweist.

## Claims

1. Method for controlling access to data stored on a communication network, between a first and a second terminal, the terminals being equipped with a first short-range communication means and with a second communication means for communicating with said network, the method comprising the following steps:
- sending (E20), to the communication network, by the first terminal, of a request to create an address for accessing the stored data;
- creation (E26), by a management device, and sending (E27), to the first communication terminal, of the corresponding access address;
- sending (E22), by the first terminal, of the access address to the second terminal via the first short-range communication means;
the method including a step of sending (E24), by the first terminal, of an order to deactivate the address for accessing the management device upon detection (E23), by the first terminal, that at least one of the two terminals is outside of the range of the first short-range communication means;
- sending (E29), by the management device, of an order to change content displayed for the second terminal; and then
- deactivation (E30), by the management device, of the access address.

2. Method according to Claim 1, **characterized in that** the address for accessing the data stored on the network is a temporary address having a predetermined duration.

3. Method according to Claim 1, **characterized in that** the first short-range communication means is an NFC means.

4. Method according to Claim 1, **characterized in that** the request to create an address includes the identifier of a second terminal, and **in that** the address for accessing the data stored on the network is an address reserved for this second terminal.

5. Method according to Claim 4, **characterized in that** it applies to a plurality of second terminals each receiving the access address that is reserved for them.

6. Computer program including code instructions for implementing the steps of the access control method according to one of Claims 1 to 5.

7. Method for managing an address for accessing data stored on a communication network, including the following steps:
- reception (E25), from a first terminal, by a management device, of a request to create an address for accessing the stored data;
- creation (E26) and sending (E27), by the management device, to the first communication terminal, of the corresponding access address, the method furthermore including the following steps:
- reception (E28), by the management device, of a request to deactivate the address for accessing the communication network, from the first terminal, following the detection, by the first terminal, of a distance outside of the range of the first means for short-range communication between the first terminal and a second terminal that is connected to said access address;
- sending (E29), by the management device, of an order to change content displayed for the second terminal; and then
- deactivation (E30), by the management device, of the access address.

8. Method according to Claim 7, **characterized in that** the request to create an address includes the identifier of a second terminal, and **in that** the address for accessing the stored data is reserved for this second terminal.

9. Computer program including code instructions for implementing the steps of the address management method according to either of Claims 7 and 8.

10. System for controlling access to data stored on a communication network, between a first and a second terminal belonging to the access control system, the terminals being equipped with a first short-range communication means and with a second communication means for communicating with said network, said system including:
- a sending module (51) of the first terminal, able to send, to the communication network, a request to create an address for accessing the stored data;
- a management device comprising a creation module (63) able to create an address for accessing the stored data and a sending module (61) able to send the corresponding access address to the first communication terminal;
- a sending module (52) of the first terminal, able to send the access address to the second terminal via the first short-range communication means;
the system being such that the sending module (51) of the first terminal is able to send, to the management device, an order to deactivate the address for accessing the communication network upon detection (53), by the first terminal, that at least one of the two terminals is outside of the range of the first short-range communication means; and in that the management device includes a sending module (61) able to send an order to change content displayed for the second terminal and a deactivation module (64) able to deactivate the access address following the sending of the order to change displayed content.

11. System including a first terminal and a device for managing an address for accessing data stored on a communication network, the device comprising:
- a module (61) for receiving a request to create an address for accessing the stored data;
- a module (63) for creating an address for accessing the stored data and a module (61) for sending the corresponding access address to a first communication terminal; the first terminal comprising a module for detecting a distance outside of the range of a first means for short-range communication between the first terminal and a second terminal that is connected to said access address; the device furthermore comprising:
- a module (61) for receiving a request to deactivate the address for accessing the communication network, from the first terminal, following the detection, by the detection module, of a distance outside of the range of a first means for short-range communication between the first terminal and a second terminal that is connected to said access address;
- a module for sending an order to change content displayed for the second terminal;
- a module (64) for deactivating the access address, implemented following the sending of the order to change displayed content.

12. System according to Claim 11, **characterized in that** an access server in a communication network includes the address management device.
